# EUROPEAN PATENT APPLICATION

(11) **EP 4 521 620 A1**
(43) Date of publication of application: **12.03.2025**
(21) Application number: 22943551.6
(22) Date of filing: 08.12.2022
(51) Int. Cl.: H02M 3/335, H02J 7/00, B60L 53/00

(54) **CHARGING DEVICE AND CHARGING CONTROL METHOD**

(30) Priority: 25.05.2022 CN 202210587569
(71) Applicant: Huawei Digital Power Technologies Co., Ltd., Shenzhen, Guangdong 518043 (CN)
(72) Inventor: HU, Biao, Shenzhen, Guangdong 518043 (CN); LIU, Yang, Shenzhen, Guangdong 518043 (CN); LI, Yongfa, Shenzhen, Guangdong 518043 (CN)
(74) Representative: Maiwald GmbH
(86) International application number: PCT/CN2022/137430
(87) International publication number: WO 2023/226364

(57) **Abstract**

This application provides a charging apparatus and a charging control method, so that only a small quantity of relays are required when an output voltage range and an output power of a power converter are increased. This effectively reduces circuit costs of the charging apparatus, and effectively simplifies a control procedure for serial connection or parallel connection between a plurality of outputs of the power converter. The apparatus includes a first power converter, a first relay, and a second relay. The first power converter includes a first output end and a second output end. Conduction states of the first relay and the second relay are controlled, to control serial connection or parallel connection between the plurality of output ends of the first power converter.

## Description

### CROSS-REFERENCE TO RELATED APPLICATIONS

This application claims priority to Chinese Patent Application No. 202210587569.7, filed with the China National Intellectual Property Administration on May 25, 2022 and entitled "CHARGING APPARATUS AND CHARGING CONTROL METHOD", which is incorporated herein by reference in its entirety.

### TECHNICAL FIELD

This application relates to the field of electronic technologies, and in particular, to a charging apparatus and a charging control method.

### BACKGROUND

Currently, electric vehicles have problems of a short endurance mileage and long charging time due to factors such as a capacity of a power battery and an output power of a charging pile. Driven by this problem, the electric vehicle industry is developing towards a high-voltage charging architecture and high-power fast charging.

A core unit of a charging pile for charging an electric vehicle includes a charging module, and the charging module supports a wide output voltage range and a high power output of the charging pile. To enable the charging pile to meet requirements for the wide output voltage range and the high power output, outputs of a plurality of power converters are usually connected in series or in parallel in the charging module, to meet charging requirements of different electric vehicles. In the industry, a plurality of relays are usually used to implement serial connection or parallel connection between a plurality of outputs of the power converter. However, in a current implementation solution, a large quantity of relays are needed, resulting in high circuit costs. In addition, the large quantity of relays result in a complex control procedure for serial connection or parallel connection between the plurality of outputs of the power converter. Consequently, reliability of a circuit is reduced.

Therefore, how to reduce the circuit costs and how to simplify the control procedure for serial connection or parallel connection between the plurality of outputs of the power converter are technical problems that urgently need to be resolved in this field.

### SUMMARY

This application provides a charging apparatus and a charging control method, so that only a small quantity of relays are required when an output voltage range and an output power of a power converter are increased. This effectively reduces circuit costs of the charging apparatus, and effectively simplifies a control procedure for serial connection or parallel connection between a plurality of outputs of the power converter.

According to a first aspect, an embodiment of this application provides a charging apparatus. The apparatus includes a first power converter, a first relay, and a second relay.

The first power converter includes a first output end and a second output end. The first relay includes a first movable contact, a first static contact, and a second static contact, the first movable contact is connected to a negative electrode of the first output end, the first static contact is connected to a positive electrode of the second output end, and the second static contact is connected to a negative electrode of the second output end. The second relay includes a second movable contact, a third static contact, and a fourth static contact, the second movable contact is connected to the positive electrode of the second output end, the third static contact is connected to the negative electrode of the first output end, and the fourth static contact is connected to a positive electrode of the first output end.

Correspondingly, the first movable contact is connected to the first static contact, and the second movable contact is connected to the third static contact, so that the first output end and the second output end can be connected in series, and a charging voltage provided by the first power converter for a load can be output. Alternatively, the first movable contact is connected to the second static contact, and the second movable contact is connected to the fourth static contact, so that the first output end and the second output end can be connected in parallel, and a charging voltage provided by the first power converter for a load can be output.

In this embodiment of this application, the first relay and the second relay that each include double static contacts are disposed in the charging apparatus. Conduction states of the first relay and the second relay are controlled, so that the first output end and the second output end of the first power converter can be connected in parallel or in series. This effectively increases an output voltage range and an output power of the first power converter. In addition, a small quantity of relays are used. This can effectively reduce circuit costs of the charging apparatus, and effectively simplify a control procedure for parallel connection or serial connection of output ends of the power converter.

It should be noted that the first power converter may be one or more power converters. Therefore, the first output end and the second output end may be two output ends of a same power converter. For example, both the first output end and the second output end are output ends of a power converter 1. Alternatively, the first output end and the second output end may be corresponding output ends of different power converters. For example, the first output end may be an output end of a power converter 1, and the second output end may be an output end of a power converter 2. That is, the charging apparatus provided in this embodiment of this application may be configured to increase output voltage ranges and output powers of one or more power converters, and to implement serial connection or parallel connection between a plurality of output ends of the one or more power converters.

In a possible design, the charging apparatus may further include a control circuit, and the control circuit is separately connected to the first relay and the second relay, so that the control circuit can be configured to control conduction states of the first relay and the second relay, to implement control on parallel connection or serial connection between the first output end and the second output end of the first power converter. In this way, this effectively simplifies a control procedure for parallel connection or serial connection between a plurality of output ends of the power converter.

In a possible design, the first relay or the second relay may include any one of the following: a single-pole double-throw relay, a double-pole double-throw relay, a single-pole three-throw relay, or a plurality of single-contact relays.

In this design, a plurality of possible implementations of the first relay or the second relay are provided, so that the charging apparatus provided in this embodiment of this application can be flexibly designed.

In a possible design, the charging apparatus further includes a first capacitor, a second capacitor, a third capacitor, and a discharge circuit. The first output end is connected to the first capacitor, the second output end is connected to the second capacitor, and the discharge circuit is separately connected to the first capacitor, the second capacitor, and the third capacitor.

It should be noted that the discharge circuit may discharge at least one of the first capacitor, the second capacitor, and the third capacitor when the charging apparatus is powered off or serial-to-parallel conversion is performed between the first output end and the second output end of the charging apparatus. Therefore, in this design, the discharge circuit is disposed in the charging apparatus, so that the discharge circuit can discharge some components in the charging apparatus when the charging apparatus is powered off or when serial-to-parallel conversion is performed between the first output end and the second output end of the charging apparatus. This effectively improves safety and reliability of the charging apparatus.

In a possible design, the discharge circuit includes a first resistor and a first switch.

In this design, the first switch is disposed in the discharge circuit, so that a turn-on state of the first switch can be controlled to control a working state of the discharge circuit.

In a possible design, the charging apparatus may further include a first semiconductor device and a second semiconductor device. One end of the first semiconductor device is connected to the first movable contact, and the other end of the first semiconductor device is connected to the second static contact. One end of the second semiconductor device is connected to the second movable contact, and the other end of the second semiconductor device is connected to the fourth static contact.

In this design, the first semiconductor device is connected in parallel to two ends of the first relay, so that the first semiconductor device can be conducted when the first relay is faulty, and the charging voltage provided by the power converter for the load can be normally output. In addition, the second semiconductor device is connected in parallel to two ends of the second relay, so that the second semiconductor device can be conducted when the second relay is faulty, and the charging voltage provided by the power converter for the load can be normally output. In this way, this can further improve circuit reliability of the charging apparatus.

In a possible design, the first semiconductor device or the second semiconductor device includes any one of the following: a diode, an insulated gate bipolar transistor (insulated gate bipolar transistor, IGBT), or a metal-oxide semiconductor field effect transistor (metal oxide semiconductor field effect transistor, MOSFET).

In this design, a plurality of possible implementations of the first semiconductor device or the second semiconductor device are provided, so that the charging apparatus provided in this embodiment of this application can be flexibly designed, and the charging apparatus can be flexibly implemented.

In a possible design, the charging apparatus may further include a third semiconductor device. One end of the third semiconductor device is connected to the negative electrode of the first output end, and the other end of the third semiconductor device is connected to the positive electrode of the second output end.

In this design, the third semiconductor device is disposed between the first output end and the second output end, so that an impulse current generated when serial-to-parallel conversion is performed between the first output end and the second output end can flow through the third semiconductor device, and the first relay and the second relay are closed with zero voltage. This effectively avoids arcing of the first relay and the second relay, and further effectively improves safety and reliability of the charging apparatus.

In this embodiment of this application, "serial-to-parallel conversion" may be understood as that the first output end and the second output end of the first power converter are switched from serial connection to parallel connection, or may be understood as that the first output end and the second output end of the first power converter are switched from parallel connection to serial connection. This is not limited in embodiments of this application.

In a possible design, the third semiconductor device may be an IGBT or an MOSFET.

In this design, a plurality of possible implementations of the third semiconductor device are provided, so that the charging apparatus provided in this embodiment of this application can be flexibly designed.

In a possible design, a topology structure of the first power converter is any one of a three-phase full-bridge LLC structure, a single-phase full-bridge LLC structure, a single-phase half-bridge LLC structure, a flyback converter, or a buck BUCK conversion circuit.

In this design, a plurality of possible implementations of the first power converter are provided, so that the charging apparatus provided in this embodiment of this application can be flexibly designed.

In a possible design, the first power converter further includes a transformer. In the three-phase full-bridge LLC structure, the single-phase full-bridge LLC structure, or the single-phase half-bridge LLC structure, the transformer may include a single winding or double windings. It should be understood that a plurality of windings may be, for example, any one of double windings, three windings, or four windings. This is not specifically limited in embodiments of this application.

In this design, a plurality of possible implementations are provided for the transformer in the first power converter, so that the first power converter can be flexibly designed, to meet requirements for voltage output ranges of different charging apparatuses.

According to a second aspect, an embodiment of this application further provides a charging control method, applied to a charging apparatus. The charging apparatus includes a first power converter, a first relay, and a second relay. The first power converter includes a first output end and a second output end. The first relay includes a first movable contact, a first static contact, and a second static contact, the first movable contact is connected to a negative electrode of the first output end, the first static contact is connected to a positive electrode of the second output end, and the second static contact is connected to a negative electrode of the second output end. The second relay includes a second movable contact, a third static contact, and a fourth static contact, the second movable contact is connected to the positive electrode of the second output end, the third static contact is connected to the negative electrode of the first output end, and the fourth static contact is connected to a positive electrode of the first output end.

The method includes: obtaining a target charging voltage of the charging apparatus, where the target charging voltage is used to charge a load; determining a target working mode of the charging apparatus based on the target charging voltage, where the target working mode is a serial connection mode or a parallel connection mode; in the serial connection mode, the first movable contact is connected to the first static contact, the second movable contact is connected to the third static contact, and the first output end is connected in series to the second output end; and in the parallel connection mode, the first movable contact is connected to the second static contact, the second movable contact is connected to the fourth static contact, and the first output end is connected in parallel to the second output end; and controlling the charging apparatus to work in the target working mode, so that the charging apparatus outputs the target charging voltage.

In this embodiment of this application, the target working mode of the charging apparatus may be determined based on the target charging voltage of the charging apparatus, and the charging apparatus is controlled to work in the target working mode, so that the charging apparatus outputs the target charging voltage. In a process of controlling the charging apparatus to work in the target working mode, the first output end and the second output end of the first power converter in the charging apparatus may be connected in parallel or in series by controlling conduction states of the first relay and the second relay, so that a voltage output by the charging apparatus is the target charging voltage, and a charging requirement of the load is effectively met. In addition, there are a small quantity of relays in the charging apparatus. This can effectively reduce circuit costs of the charging apparatus, and effectively simplify a control procedure for parallel connection or serial connection of output ends of a power converter.

In a possible design, the first relay or the second relay includes any one of the following: a single-pole double-throw relay, a double-pole double-throw relay, a single-pole three-throw relay, or a plurality of single-contact relays.

In a possible design, the determining a target working mode of the charging apparatus based on the target charging voltage includes: if the target charging voltage is greater than a first threshold, determining that the target working mode is the serial connection mode; or if the target charging voltage is less than or equal to a first threshold, determining that the target working mode is the parallel connection mode.

It may be understood that the first threshold is a voltage threshold for performing serial-to-parallel conversion at the output end of the power converter.

In this design, if the target charging voltage is greater than the voltage threshold, it is determined that the target working mode is the serial connection mode; or if the target charging voltage is less than or equal to the voltage threshold, it is determined that the target working mode is the parallel connection mode. In this way, the target working mode of the charging apparatus 200 is determined based on the target charging voltage of the to-be-charged load, so that the charging apparatus 200 can output the corresponding target charging voltage, thereby effectively meeting a charging requirement of the to-be-charged load.

In a possible design, the charging apparatus further includes a first capacitor, a second capacitor, a third capacitor, and a discharge circuit. The first output end is connected to the first capacitor, the second output end is connected to the second capacitor, and the discharge circuit is separately connected to the first capacitor, the second capacitor, and the third capacitor. The method further includes: when the charging apparatus is powered off or serial-to-parallel conversion is performed between the first output end and the second output end of the charging apparatus, controlling the discharge circuit to discharge at least one of the first capacitor, the second capacitor, and the third capacitor. For beneficial effect of the design, refer to related descriptions in the first aspect. Details are not described herein again.

In a possible design, the charging apparatus further includes a first semiconductor device and a second semiconductor device. One end of the first semiconductor device is connected to the first movable contact, and the other end of the first semiconductor device is connected to the second static contact. One end of the second semiconductor device is connected to the second movable contact, and the other end of the second semiconductor device is connected to the fourth static contact. Correspondingly, the method further includes: when the first relay is faulty, controlling the first semiconductor device to be conducted; or when the second relay is faulty, controlling the second semiconductor device to be conducted. For beneficial effect of the design, refer to related descriptions in the first aspect. Details are not described herein again.

In a possible design, before the controlling the charging apparatus to work in the target working mode, the method further includes: determining whether a current working mode of the charging apparatus is the same as the target working mode; and if the current working mode of the charging apparatus is the same as the target working mode, maintaining current conduction states of the first relay and the second relay; or if the current working mode of the charging apparatus is different from the target working mode, adjusting current conduction states of the first relay and the second relay, and switching the current working mode to the target working mode.

In this design, before the charging apparatus is controlled to work in the target working mode, whether the current working mode of the charging apparatus is the same as the target working mode may be further determined. If the current working mode of the charging apparatus is the same as the target working mode, the current conduction states of the first relay and the second relay are maintained. If the current working mode of the charging apparatus is different from the target working mode, the current conduction states of the first relay and the second relay are adjusted, and the current working mode is switched to the target working mode. In this way, this can reduce a repeated control procedure for parallel connection or serial connection between a plurality of output ends of the first power converter in the charging apparatus, or implement a switching procedure for parallel connection or serial connection between the plurality of output ends of the first power converter, and further simplifies the control procedure for parallel connection or serial connection between the plurality of output ends of the first power converter, and improves reliability of the charging apparatus.

In a possible design, the charging apparatus further includes a third semiconductor device. One end of the third semiconductor device is connected to the negative electrode of the first output end, and the other end of the third semiconductor device is connected to the positive electrode of the second output end. Correspondingly, the method further includes: when the current working mode is switched to the target working mode, controlling the third semiconductor device to be conducted.

In this design, when the current working mode is switched to the target working mode, an impulse current generated when serial-to-parallel conversion is performed between the first output end and the second output end can flow through the third semiconductor device, and the first relay and the second relay are closed with zero voltage. This effectively avoids arcing of the first relay and the second relay, and further effectively improves safety and reliability of the charging apparatus.

According to a third aspect, based on the charging apparatus in the first aspect, an embodiment of this application further provides a charging control apparatus. The charging control apparatus includes:
an obtaining unit, configured to obtain a target charging voltage of the charging apparatus, where the target charging voltage is used to charge a load;
a determining unit, configured to determine a target working mode of the charging apparatus based on the target charging voltage, where the target working mode is a serial connection mode or a parallel connection mode; in the serial connection mode, the first movable contact is connected to the first static contact, the second movable contact is connected to the third static contact, and the first output end is connected in series to the second output end; and in the parallel connection mode, the first movable contact is connected to the second static contact, the second movable contact is connected to the fourth static contact, and the first output end is connected in parallel to the second output end; and
a control unit, configured to control the charging apparatus to work in the target working mode, so that the charging apparatus outputs the target charging voltage.

According to a fourth aspect, an embodiment of this application further provides a charging control apparatus. The charging control apparatus includes a processor. The processor is configured to: be coupled to a memory; and read and execute computer program instructions in the memory, to perform the method in any one of the second aspect or the possible designs of the second aspect.

According to a fifth aspect, an embodiment of this application further provides a charging system. The charging system includes the charging apparatus and the charging control apparatus in any one of the first aspect or the possible designs of the first aspect, and the charging apparatus provides a charging voltage for a load under control of the charging control apparatus.

According to a sixth aspect, an embodiment of this application further provides a charging system. The charging system includes a charging apparatus and the charging control apparatus in the fourth aspect. The charging control apparatus is configured to control a charging voltage provided by the charging apparatus for a load.

For beneficial effect of the third aspect and the sixth aspect, refer to related descriptions in the first aspect and the second aspect. Details are not described herein again.

### BRIEF DESCRIPTION OF DRAWINGS

FIG. 1 is a schematic diagram of a structure of a circuit in which output ends of a power converter are connected in parallel or in series;
FIG. 2A is a schematic diagram of a structure of a charging apparatus according to this application;
FIG. 2B is a schematic diagram of a structure of a charging apparatus according to this application;
FIG. 3 is a schematic diagram of a structure of another charging apparatus according to this application;
FIG. 4 is a schematic diagram of a structure of another charging apparatus according to this application;
FIG. 5 is a schematic diagram of a structure of another charging apparatus according to this application;
FIG. 6 is a schematic diagram of a structure of another charging apparatus according to this application;
FIG. 7 is a schematic diagram of a structure of another charging apparatus according to this application;
FIG. 8 is a schematic diagram of a structure of another charging apparatus according to this application;
FIG. 9 is a schematic diagram of a structure of another charging apparatus according to this application;
FIG. 10 is a schematic diagram of a structure of another charging apparatus according to this application;
FIG. 11 is a schematic diagram of a structure of another charging apparatus according to this application;
FIG. 12 is a schematic flowchart of a charging control method according to this application; and
FIG. 13 is a schematic diagram of a structure of a charging control apparatus according to this application.

### DESCRIPTION OF EMBODIMENTS

It should be noted that "serial-to-parallel conversion" in embodiments of this application may be understood as that a plurality of output ends of a power converter are switched from serial connection to parallel connection, or may be understood as that a plurality of output ends of the power converter are switched from parallel connection to serial connection. This is not limited in embodiments of this application.

It should be noted that "connection" in embodiments of this application may be direct connection, or may be connection by using one or more modules or by using one or more devices. For example, if A is connected to B, or A is connected to B, it may indicate that A is directly connected to B, or A is connected to B by using C. C may represent one or more modules, or may represent one or more devices.

In embodiments of this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. "At least one of the following items (pieces)" or a similar expression thereof means any combination of these items, including any combination of singular items (pieces) or plural items (pieces).

In addition, it should be understood that in descriptions of this application, terms such as "first" and "second" are merely used for distinguishing and description, but should not be understood as indicating or implying relative importance, or should not be understood as indicating or implying a sequence.

The following describes technical features in embodiments of this application.

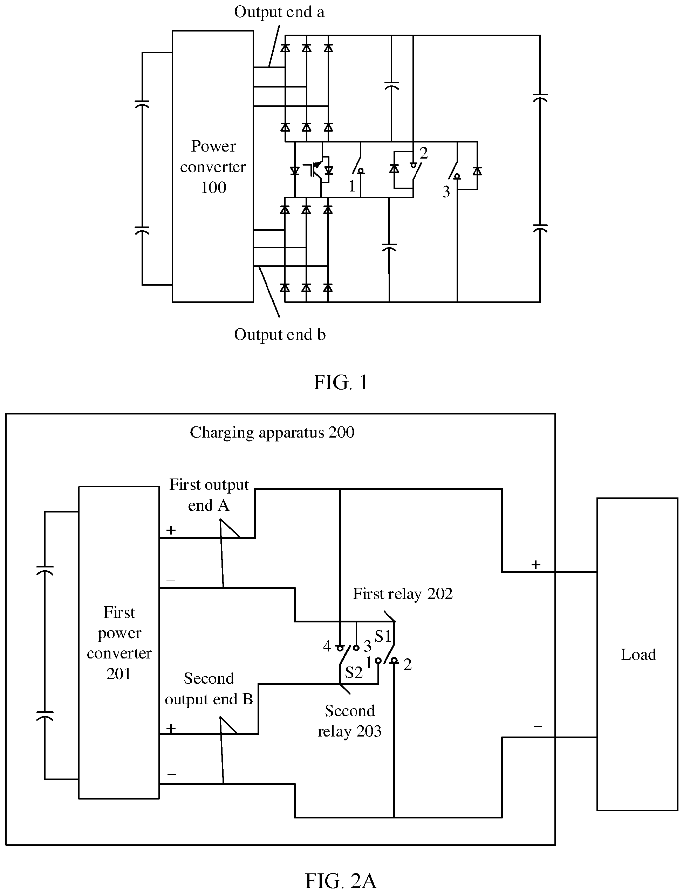

FIG. 1 is a schematic diagram of a power converter. The power converter 100 includes an output end a and an output end b. Parallel connection or serial connection between the output end a and the output end b may be implemented by using a single-pole single-throw relay 1, a single-pole single-throw relay 2, and a single-pole single-throw relay 3. When the single-pole single-throw relay 1 is cut off, and the single-pole single-throw relay 2 and the single-pole single-throw relay 3 are conducted, the output end a and the output end b are connected in parallel. When the single-pole single-throw relay 1 is conducted, and the single-pole single-throw relay 2 and the single-pole single-throw relay 3 are cut off, the output end a and the output end b are connected in series.

If the output end a and the output end b need to be converted from serial connection to parallel connection, the single-pole single-throw relay 1 may be first controlled to be cut off, and then the single-pole single-throw relay 2 and the single-pole single-throw relay 3 are controlled to be conducted. If the output end a and the output end b need to be converted from parallel connection to serial connection, the single-pole single-throw relay 1 may be first controlled to be conducted, and then the single-pole single-throw relay 2 and the single-pole single-throw relay 3 are controlled to be cut off.

Although the foregoing solution implements serial connection or parallel connection between a plurality of outputs of the power converter, a large quantity of relays are needed, resulting in high circuit costs. In addition, the large quantity of relays that need to be controlled result in a complex control procedure for serial connection, parallel connection, or serial-to-parallel conversion between the plurality of outputs of the power converter.

In view of this, an embodiment of this application provides a charging apparatus. A first relay and a second relay that each include double static contacts are disposed in the charging apparatus. Conduction states of the first relay and the second relay are controlled, so that parallel connection, serial connection, or serial-to-parallel conversion between a first output end and a second output end in the first power converter can be controlled. In this way, only a small quantity of relays are required when an output voltage range and an output power of a power converter are increased. This effectively reduces circuit costs of the charging apparatus, and effectively simplifies a control procedure for parallel connection, serial connection, or serial-to-parallel conversion between a plurality of output ends of the power converter.

The following describes the charging apparatus provided in embodiments of this application with reference to specific accompanying drawings.

For example, FIG. 2A is a schematic diagram of a structure of a charging apparatus according to an embodiment of this application. The charging apparatus 200 includes a first power converter 201, a first relay 202, and a second relay 203.

The first power converter 201 includes a first output end A and a second output end B. The first relay 202 includes a first movable contact S1, a first static contact 1, and a second static contact 2. The second relay 202 includes a second movable contact S2, a third static contact 3, and a fourth static contact 4. The first movable contact S1 is connected to a negative electrode of the first output end A, the first static contact 1 is connected to a positive electrode of the second output end B, and the second static contact 2 is connected to a negative electrode of the second output end B. The second movable contact S2 is connected to the positive electrode of the second output end B, the third static contact 3 is connected to the negative electrode of the first output end A, and the fourth static contact 4 is connected to a positive electrode of the first output end A.

When the first movable contact S1 is connected to the first static contact 1, and the second movable contact S2 is connected to the third static contact 3, the first output end A and the second output end B may be connected in series, so that an output end formed by connecting the first output end A and the second output end B in series may output, to the load, a charging voltage provided by the first power converter 201. Alternatively, when the first movable contact S1 is connected to the second static contact 2, and the second movable contact S2 is connected to the fourth static contact 4, the first output end A and the second output end B may be connected in parallel, so that an output end formed by connecting the first output end A and the second output end B in parallel may output, to the load, a charging voltage provided by the first power converter 201.

In a possible implementation, when the first output end A and the second output end B are converted from serial connection to parallel connection, the first movable contact S1 needs to be controlled to be disconnected from the first static contact 1, the first movable contact S1 needs to be controlled to be connected to the second static contact 2, the second movable contact S2 needs to be controlled to be disconnected from the third static contact 3, and the second movable contact S2 needs to be controlled to be connected to the fourth static contact 4. When the first output end A and the second output end B are converted from parallel connection to serial connection, the first movable contact S1 needs to be controlled to be disconnected from the second static contact 2, the first movable contact S1 needs to be controlled to be connected to the first static contact 1, the second movable contact S2 needs to be controlled to be disconnected from the fourth static contact 4, and the second movable contact S2 needs to be controlled to be connected to the third static contact 3. In this way, serial-to-parallel conversion between the first output end A and the second output end B can be implemented by controlling only the first relay 202 and the second relay 203.

It should be understood that in FIG. 2A, that the first relay 202 and the second relay 203 are single-pole double-throw relays is used as an example. In another possible implementation, the first relay 202 or the second relay 203 may alternatively be another relay including double contacts. This is not limited in embodiments of this application. Optionally, the first relay 202 or the second relay 203 may include any one of the following: a single-pole double-throw relay, a double-pole double-throw relay, a single-pole three-throw relay, or a plurality of single-contact relays. When the first relay or the second relay includes a plurality of single-contact relays, the first relay or the second relay may include at least two single-contact relays. In this way, there are a plurality of implementations of the first relay or the second relay, so that the charging apparatus provided in this embodiment of this application can be flexibly designed and implemented.

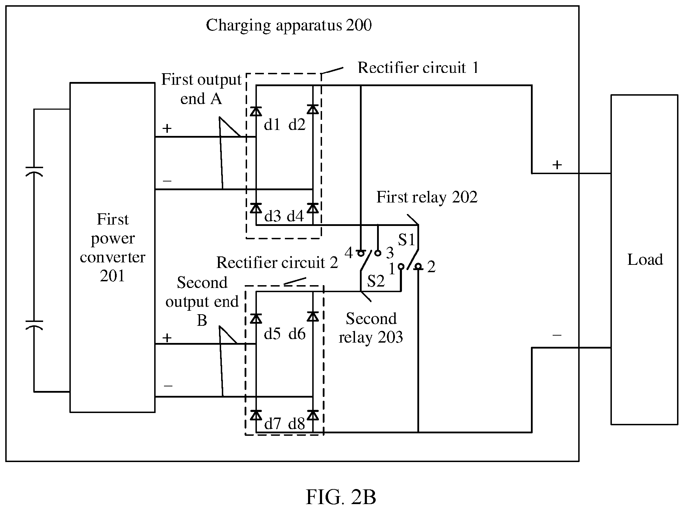

As shown in FIG. 2B, the charging apparatus 200 may further include a rectifier circuit 1 and a rectifier circuit 2. The rectifier circuit 1 is connected to the first output end A, so that the rectifier circuit 1 can rectify a current output by the first output end A. The rectifier circuit 2 is connected to the first output end B, so that the rectifier circuit 2 can rectify a current output by the second output end B. The rectifier circuit 1 includes a diode d1, a diode d2, a diode d3, and a diode d4, in other words, the current output by the first output end A can be rectified by using the diode d1, the diode d2, the diode d3, and the diode d4. The rectifier circuit 2 includes a diode d5, a diode d6, a diode d7, and a diode d8, in other words, the current output by the second output end B can be rectified by using the diode d5, the diode d6, the diode d7, and the diode d8. It should be understood that the rectifier circuit 1 or the rectifier circuit 2 may include more or fewer diodes. Quantities of diodes included in the rectifier circuit 1 and the rectifier circuit 2 in FIG. 2B are merely examples, and are not limited.

In a possible implementation, the charging apparatus 200 may further include a first capacitor, a second capacitor, a third capacitor, and a discharge circuit. The first output end is connected to the first capacitor, the second output end is connected to the second capacitor, and the discharge circuit is separately connected to the first capacitor, the second capacitor, and the third capacitor. In this way, when serial-to-parallel conversion is performed between the first output end and the second output end in the charging apparatus 200 or the charging apparatus 200 is powered off, the discharge circuit can discharge at least one of the first capacitor, the second capacitor, and the third capacitor, thereby effectively improving safety and reliability of the charging apparatus 200.

Optionally, the discharge circuit may include a first resistor and a first switch. In this way, a turn-on state of the first switch can be controlled to flexibly control a working state of the discharge circuit. For example, when serial-to-parallel conversion is performed between the first output end and the second output end in the charging apparatus 200 or the charging apparatus 200 is powered off, the first switch is controlled to be turned on, so that the discharge circuit is in the working state, and the discharge circuit may discharge at least one of the first capacitor, the second capacitor, and the third capacitor. This reduces high voltages of the first capacitor, the second capacitor, and the third capacitor, and improves safety and reliability of the charging apparatus 200. For another example, when the first output end and the second output end of the charging apparatus 200 are connected in series or in parallel, or the charging apparatus 200 is powered on, the first switch is controlled to be turned off, so that the discharge circuit does not work, and the third capacitor can normally transmit, to the load, a charging voltage that is output by the first output end and the second output end.

It should be understood that any one of the first capacitor, the second capacitor, or the third capacitor may include one or more capacitors, and the first resistor may include one or more resistors. This is not specifically limited in embodiments of this application. The following provides descriptions with reference to specific examples.

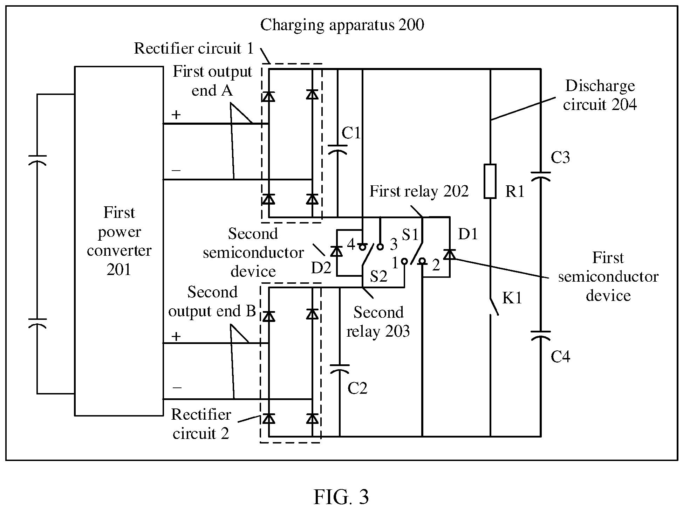

Example 1: The first capacitor is a capacitor C1, the second capacitor is a capacitor C2, the third capacitor is a capacitor C3 and a capacitor C4, the first resistor in the discharge circuit is a resistor R1, and the first switch in the discharge circuit is a switch K1. FIG. 3 is a schematic diagram of another possible structure of the charging apparatus 200 according to this embodiment of this application. The charging apparatus 200 further includes the capacitor C1, the capacitor C2, the capacitor C3, the capacitor C4, and the discharge circuit 204. The discharge circuit 204 includes the resistor R1 and the switch K1, and the resistor R1 and the switch K1 are connected in series. The positive electrode of the first output end A is connected to a positive electrode of the capacitor C1, and the negative electrode of the first output end A is connected to a negative electrode of the capacitor C1. The positive electrode of the second output end B is connected to a positive electrode of the capacitor C2, and the negative electrode of the second output end B is connected to a negative electrode of the second capacitor C2. In addition, the positive electrode of the capacitor C1 is connected to one end of the resistor R1, and the negative electrode of the capacitor C1 is connected to the first movable contact S1. The positive electrode of the capacitor C2 is connected to the second movable contact S2, and the negative electrode of the capacitor C2 is connected to one end of the switch K1. The capacitor C3 and the capacitor C4 are connected in series, the positive electrode of the capacitor C3 is connected to one end of the resistor R1, and the negative electrode of the capacitor C4 is connected to one end of the switch K1. Correspondingly, when serial-to-parallel conversion is performed between the first output end A and the second output end B of the charging apparatus 200 or the charging apparatus 200 is powered off, the discharge circuit 204 can discharge at least one of the capacitor C1, the capacitor C2, the capacitor C3, and the capacitor C4, thereby effectively improving circuit safety of the charging apparatus 200. In addition, when the first output end A and the second output end B of the charging apparatus 200 are connected in series or in parallel, or the charging apparatus 200 is powered on, the first switch is controlled to be turned off, so that the discharge circuit 204 does not work, and the capacitor C3 and the capacitor C4 can normally transmit, to the load, charging voltages that are output by the first output end A and the second output end B.

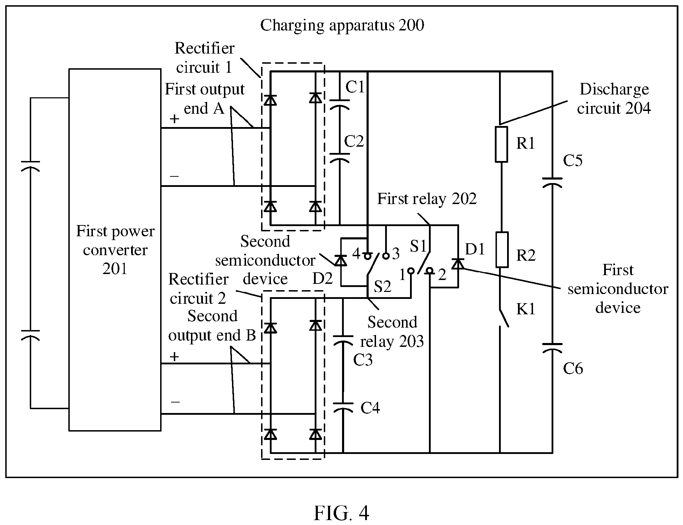

Example 2: The first capacitor is capacitors C1 and C2, the second capacitor is capacitors C3 and C4, the third capacitor is a capacitor C5 and a capacitor C6, the first resistor in the discharge circuit is a resistor R1 and a resistor R2, and the first switch in the discharge circuit is a switch K1. FIG. 4 is a schematic diagram of another possible structure of the charging apparatus 200 according to this embodiment of this application. The charging apparatus 200 further includes the capacitor C1, the capacitor C2, the capacitor C3, the capacitor C4, the capacitor C5, the capacitor C6, and the discharge circuit 204. The discharge circuit 204 includes the resistor R1, the resistor R2, and the switch K1, and the resistor R1, the resistor R2, and the switch K1 are connected in series. The capacitor C1 and the capacitor C2 are connected in series, the positive electrode of the first output end A is connected to a positive electrode of the capacitor C1, and the negative electrode of the first output end A is connected to a negative electrode of the capacitor C2. The capacitor C3 and the capacitor C4 are connected in series, the positive electrode of the second output end B is connected to a positive electrode of the capacitor C3, and the negative electrode of the second output end B is connected to a negative electrode of the second capacitor C4. In addition, the positive electrode of the capacitor C1 is connected to one end of the resistor R1, and the negative electrode of the capacitor C2 is connected to the first movable contact S1. The positive electrode of the capacitor C3 is connected to the second movable contact S2, and the negative electrode of the capacitor C4 is connected to one end of the switch K1. The capacitor C5 and the capacitor C6 are connected in series, a positive electrode of the capacitor C5 is connected to one end of the resistor R1, and a negative electrode of the capacitor C6 is connected to one end of the switch K1. Correspondingly, when serial-to-parallel conversion is performed between the first output end A and the second output end B of the charging apparatus 200 or the charging apparatus is powered off, the discharge circuit 204 can discharge at least one of the capacitor C1, the capacitor C2, the capacitor C3, the capacitor C4, the capacitor C5, and the capacitor C6, thereby effectively improving circuit safety of the charging apparatus 200. In addition, when the first output end A and the second output end B of the charging apparatus 200 are connected in series or in parallel, or the charging apparatus 200 is powered on, the first switch is controlled to be turned off, so that the discharge circuit 204 does not work, and the capacitor C5 and the capacitor C6 can normally transmit, to the load, charging voltages that are output by the first output end A and the second output end B.

In a possible implementation, the charging apparatus 200 may further include a first semiconductor device and a second semiconductor device. One end of the first semiconductor device is connected to the first movable contact S1, and the other end of the first semiconductor device is connected to the second static contact 2. One end of the second semiconductor device is connected to the second movable contact S2, and the other end of the second semiconductor device is connected to the fourth static contact 4. In this way, the first semiconductor device is connected in parallel to two ends of the first relay 202, so that when the first relay 202 is faulty, the first semiconductor device can be controlled to be conducted, so that a charging voltage provided by the first power converter 201 for the load can be normally output. In addition, the second semiconductor device is connected in parallel to two ends of the second relay 203, so that when the second relay 203 is faulty, the second semiconductor device can be controlled to be conducted, so that the charging voltage provided by the first power converter 201 for the load can be normally output. This further improves circuit reliability of the charging apparatus 200.

Optionally, the first semiconductor device or the second semiconductor device includes any one of the following: a diode, an insulated gate bipolar transistor (insulated gate bipolar transistor, IGBT), or a metal-oxide semiconductor field effect transistor (metal oxide semiconductor field effect transistor, MOSFET). In this way, a plurality of possible implementations of the first semiconductor device or the second semiconductor device are provided, so that the charging apparatus 200 can further be flexibly designed or implemented.

For example, as shown in FIG. 3 or FIG. 4, the first semiconductor device is a diode D1, and the second semiconductor device is a diode D2. An anode of the diode D1 is connected to the second static contact 2, and a cathode of the diode D1 is connected to the first movable contact S1. An anode of the diode D2 is connected to the second movable contact S2, and a cathode of the diode D2 is connected to the fourth movable contact 4. Correspondingly, when the first relay 202 is faulty, the diode D1 is controlled to be conducted, so that the charging voltage provided by the first power converter 201 for the load can be normally output. When the first relay 202 is faulty, the diode D2 is controlled to be conducted, so that the charging voltage provided by the first power converter 201 for the load can be normally output.

In a possible implementation, the charging apparatus 200 may further include a third semiconductor device. One end of the third semiconductor device is connected to the negative electrode of the first output end A, and the other end of the third semiconductor device is connected to the positive electrode of the second output end B. In this way, an impulse current generated when serial-to-parallel conversion is performed between the first output end A and the second output end B can flow through the third semiconductor device, so that the first relay 202 and the second relay 203 are closed with zero voltage. This effectively avoids arcing of the first relay 202 and the second relay 203, and further effectively improves safety and reliability of the charging apparatus 200. It should be noted that "serial-to-parallel conversion" herein may be understood as that the first output end A and the second output end B of the first power converter are switched from serial connection to parallel connection, or may be understood as that the first output end A and the second output end B of the first power converter are switched from parallel connection to serial connection.

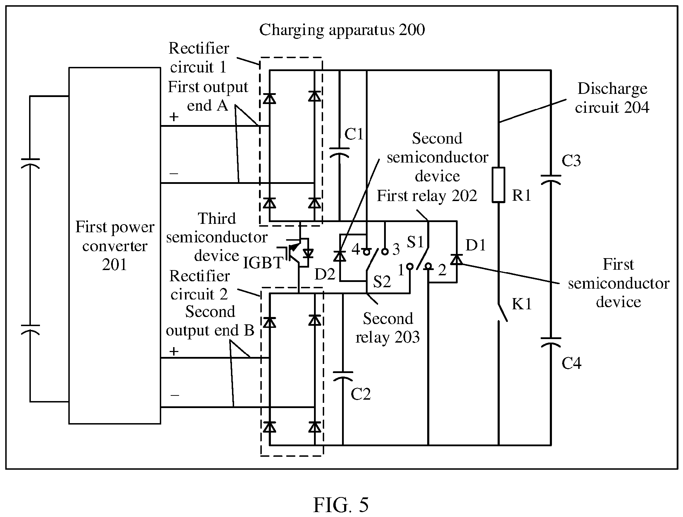

Optionally, the third semiconductor device may be an IGBT or an MOSFET. This is not specifically limited in embodiments of this application. In this way, a plurality of possible implementations of the third semiconductor device are provided, so that the charging apparatus 200 provided in this embodiment of this application can be flexibly designed. For example, as shown in FIG. 5, the third semiconductor device is an IGBT, an emitter of the IGBT is connected to the negative electrode of the first output end A, and a collector of the IGBT is connected to a positive electrode of the second output end B. In this way, the impulse current generated when serial-to-parallel conversion is performed between the first output end A and the second output end B can flow through the IGBT, so that the first relay 202 and the second relay 203 can be closed with zero voltage.

It should be noted that the first power converter 201 may be one or more power converters, the first output end A may include one or more output ends, and the second output end B may include one or more output ends. This is not specifically limited in embodiments of this application. The following provides descriptions based on different cases.

Case 1: When the first power converter 201 is one power converter, the first output end A and the second output end B may be output ends of a same power converter.

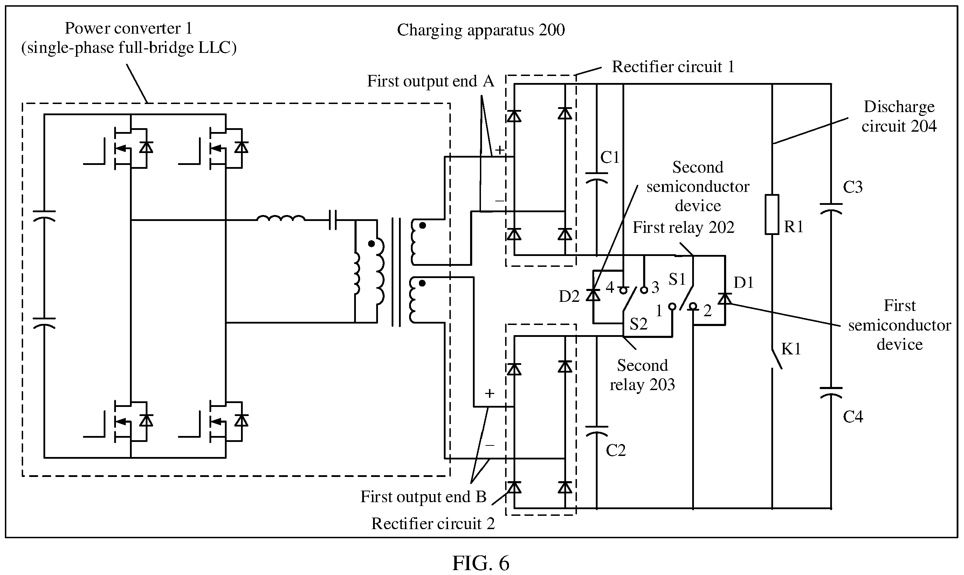

For example, the first power converter is a power converter 1, and the first output end A and the first output end B each are one output end. As shown in FIG. 6, the charging apparatus 200 includes the power converter 1, the first relay 202, and the second relay 203. The power converter 1 includes the first output end A and the second output end B. The first static contact 1 is connected to the positive electrode of the second output end B, and the second static contact 2 is connected to the negative electrode of the second output end B. The second relay 203 includes the second movable contact S2, the third static contact 3, and the fourth static contact 4. The second movable contact S2 is connected to the positive electrode of the second output end B, the third static contact 3 is connected to the negative electrode of the first output end A, and the fourth static contact 4 is connected to the positive electrode of the first output end A. Correspondingly, when the first movable contact S1 is connected to the first static contact 1, and the second movable contact S2 is connected to the third static contact 3, the first output end A and the second output end B may be connected in series, so that an output end formed by connecting the first output end A and the second output end B in series may output, to the load, a charging voltage provided by the power converter 1. Alternatively, when the first movable contact S1 is connected to the second static contact 2, and the second movable contact S2 is connected to the fourth static contact 4, the first output end A and the second output end B may be connected in parallel, so that an output end formed by connecting the first output end A and the second output end B in parallel may output, to the load, a charging voltage provided by the power converter 1. In addition, serial-to-parallel conversion between the first output end A and the second output end B (namely, a plurality of output ends of the power converter 1) can be implemented by controlling the first relay 202 and the second relay 203. For a specific control process of serial-to-parallel conversion, refer to the foregoing description. Details are not described herein again.

In the case 1, when an output voltage range and an output power of a single power converter are increased, the charging apparatus 200 can use a small quantity of relays (namely, the first relay 202 and the second relay 203), to effectively reduce circuit costs of the charging apparatus 200. In addition, a small quantity of relays are used. This can effectively simplify a control procedure for parallel connection, serial connection, or serial-to-parallel conversion between a plurality of output ends of one power converter.

Case 2: When the first power converter 201 is a plurality of power converters, the first output end A and the second output end B may respectively correspond to different power converters. That is, the first output end A and the second output end B may be output ends of different power converters.

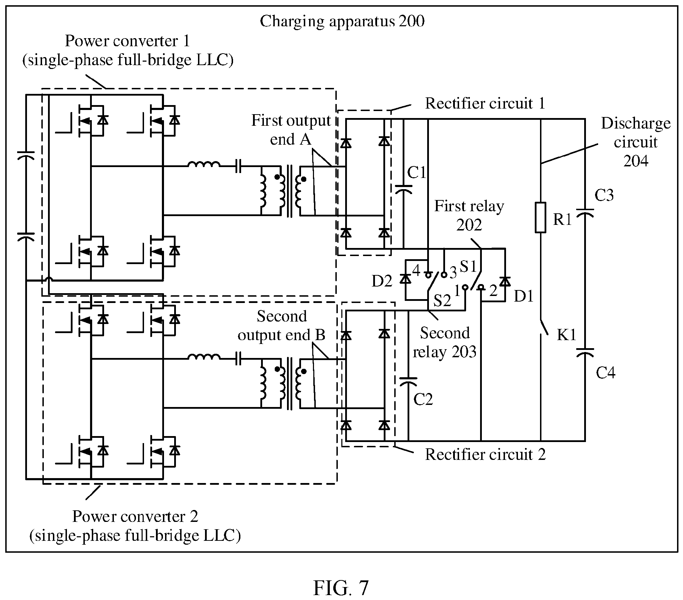

Example 1: The first power converter 201 is a power converter 1 and a power converter 2, and the first output end A and the first output end B each are one output end. As shown in FIG. 7, the charging apparatus 200 includes the power converter 1, the power converter 2, the first relay 202, and the second relay 203. The power converter 1 includes the first output end A, and the power converter 2 includes the second output end B. The first static contact 1 is connected to the positive electrode of the second output end B, and the second static contact 2 is connected to the negative electrode of the second output end B. The second relay 203 includes the second movable contact S2, the third static contact 3, and the fourth static contact 4. The second movable contact S2 is connected to the positive electrode of the second output end B, the third static contact 3 is connected to the negative electrode of the first output end A, and the fourth static contact 4 is connected to the positive electrode of the first output end A. Correspondingly, when the first movable contact S1 is connected to the first static contact 1, and the second movable contact S2 is connected to the third static contact 3, the first output end A and the second output end B may be connected in series, so that an output end formed by connecting the first output end A and the second output end B in series may integrate charging voltages provided by the power converter 1 and the power converter 2, and output the charging voltages to the load. Alternatively, when the first movable contact S1 is connected to the second static contact 2, and the second movable contact S2 is connected to the fourth static contact 4, the first output end A and the second output end B may be connected in parallel, so that an output end formed by connecting the first output end A and the second output end B in parallel may integrate charging voltages provided by the power converter 1 and the power converter 2, and output the charging voltages to the load. In addition, serial-to-parallel conversion between the first output end A and the second output end B (namely, output ends of the power converter 1 and the power converter 2) can be implemented by controlling the first relay 202 and the second relay 203. For a specific control process of serial-to-parallel conversion, refer to the foregoing description. Details are not described herein again.

In the example 1, when output voltage ranges and output powers of the plurality of power converters are increased, the charging apparatus 200 can use a small quantity of relays (namely, the first relay 202 and the second relay 203), to effectively reduce circuit costs of the charging apparatus 200. In addition, a small quantity of relays are used. This can effectively simplify a control procedure for parallel connection, serial connection, or serial-to-parallel conversion between output ends of the plurality of power converters.

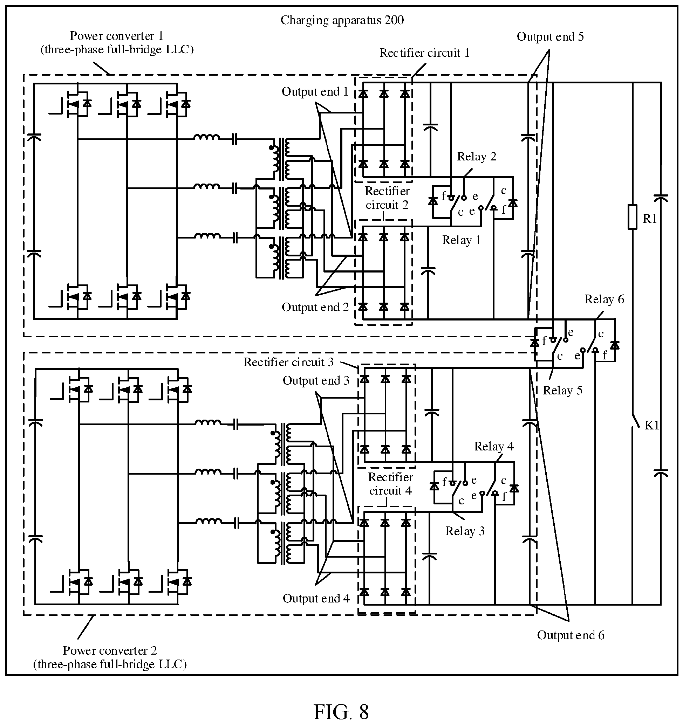

Example 2: The first power converter 201 is a power converter 1 and a power converter 2, the first output end A is an output end 1 and an output end 2, and the second output end B is an output end 3 and an output end 4. As shown in FIG. 8, the charging apparatus 200 includes the power converter 1, the power converter 2, a relay 1, a relay 2, a relay 3, a relay 4, a relay 5, and a relay 6. The power converter 1 includes the output end 1 and the output end 2, the power converter 2 includes the output end 3 and the output end 4, and the relay 1, the relay 2, the relay 3, the relay 4, the relay 5, and the relay 6 each include a movable contact c, a static contact e, and a static contact f. Correspondingly, when the movable contacts c in the relay 1 and the relay 2 are respectively connected to the static contacts e in the relay 1 and the relay 2, the output end 1 and the output end 2 may be connected in series, to form an output end 5; or when the movable contacts c in the relay 1 and the relay 2 are respectively connected to the static contacts f in the relay 1 and the relay 2, the output end 1 and the output end 2 may be connected in parallel, to form an output end 5. In addition, when the movable contacts c in the relay 3 and the relay 4 are respectively connected to the static contacts e in the relay 3 and the relay 4, the output end 3 and the output end 4 may be connected in series, to form an output end 6; or when the movable contacts c in the relay 3 and the relay 4 are respectively connected to the static contacts f in the relay 3 and the relay 4, the output end 3 and the output end 4 may be connected in parallel, to form an output end 6. Further, when the dynamic contacts c in the relay 5 and the relay 6 are respectively connected to the static contacts e in the relay 5 and the relay 6, the output end 5 and the output end 6 may be connected in series, so that an output end formed by connecting the output end 5 and the output end 8 in series may integrate charging voltages provided by the power converter 1 and the power converter 2, and output the charging voltages to the load. When the dynamic contacts c in the relay 5 and the relay 6 are respectively connected to the static contacts f in the relay 5 and the relay 6, the output end 5 and the output end 6 may be connected in parallel, so that an output end formed by connecting the output end 5 and the output end 6 in parallel may integrate charging voltages provided by the power converter 1 and the power converter 2, and output the charging voltages to the load. In addition, when the output end 5 and the output end 6 are converted from serial connection to parallel connection, the dynamic contacts c in the relay 5 and the relay 6 are controlled to be respectively disconnected from the static contacts e in the relay 5 and the relay 6, and the dynamic contacts c in the relay 5 and the relay 6 are controlled to be respectively connected to the static contacts f in the relay 5 and the relay 6. When the output end 5 and the output end 6 are converted from parallel connection to serial connection, the dynamic contacts c in the relay 5 and the relay 6 are controlled to be respectively disconnected from the static contacts f in the relay 5 and the relay 6, and the dynamic contacts c in the relay 5 and the relay 6 are controlled to be respectively connected to the static contacts e in the relay 5 and the relay 6.

In the example 2, when output voltage ranges and output powers of the plurality of power converters are increased, the charging apparatus 200 can use a small quantity of relays (namely, the relay 5 and the relay 6), to effectively reduce circuit costs of the charging apparatus 200. In addition, a small quantity of relays are used. This can effectively simplify a control procedure for parallel connection, serial connection, or serial-to-parallel conversion between a plurality of output ends of the plurality of power converters.

It may be understood that in the foregoing example 2, the output ends of the power converter are merely two output ends. In another possible embodiment, the power converter may further include more output ends, for example, four output ends or six output ends. This is not limited in embodiments of this application. In addition, there may be more or fewer relays in the charging apparatus 200. The foregoing examples are merely examples.

It should be noted that, in this embodiment of this application, a topology structure of the first power converter 201 may be any one of a three-phase full-bridge LLC structure, a single-phase full-bridge LLC structure, a single-phase half-bridge LLC structure, a flyback converter, or a buck BUCK conversion circuit. Therefore, the charging apparatus 200 provided in this embodiment of this application can be flexibly designed and implemented.

Example 1: As shown in FIG. 6 and FIG. 7, the topology structure of the first power converter 201 may be a single-phase full-bridge LLC structure. For a circuit connection relationship between the single-phase full-bridge LLC structure and another module in the charging apparatus 200, refer to the foregoing descriptions. Details are not described herein again.

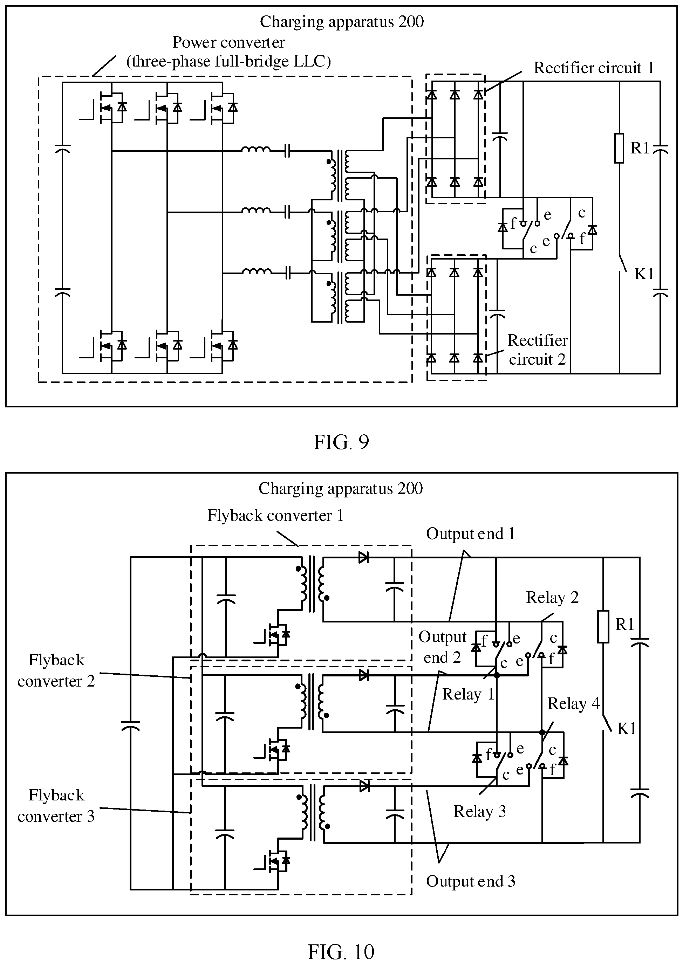

Example 2: As shown in FIG. 8 or FIG. 9, the topology structure of the first power converter 201 may be a three-phase full-bridge LLC structure. For a circuit connection relationship between the three-phase full-bridge LLC structure and another module in the charging apparatus 200, refer to the foregoing descriptions. Details are not described herein again.

Example 3: As shown in FIG. 10, the topology structure of the first power converter 201 may be a flyback converter. Correspondingly, the charging apparatus 200 may include a flyback converter 1, a flyback converter 2, a flyback converter 3, the relay 1, the relay 2, the relay 3, and the relay 4. The flyback converter 1 includes the output end 1, the flyback converter 2 includes the output end 2, and the flyback converter 3 includes the output end 3. The relay 1, the relay 2, the relay 3, and the relay 4 each include the dynamic contact c, the static contact e, and the static contact f. Correspondingly, the movable contact c in the relay 1 is connected to the static contact e in the relay 1, the movable contact c in the relay 2 is connected to the static contact e in the relay 2, the movable contact c in the relay 3 is connected to the static contact e in the relay 3, and the movable contact c in the relay 4 is connected to the static contact e in the relay 4, so that the output end 1, the output end 2, and the output end 3 can be connected in series. The movable contact c in the relay 1 is connected to the static contact f in the relay 1, the movable contact c in the relay 2 is connected to the static contact f in the relay 2, the movable contact c in the relay 3 is connected to the static contact f in the relay 3, and the movable contact c in the relay 4 is connected to the static contact f in the relay 4, so that the output end 1, the output end 2, and the output end 3 can be connected in parallel.

It should be noted that the first power converter 201 may be a DC/DC converter, and the DC/DC converter may convert a voltage of an input direct current; the first power converter 201 may be an AC/DC converter, and the AC/DC converter may convert an input alternating current into a direct current; or the first power converter 201 may be a power converter of a DC/AC converter or an AC/AC converter. A specific implementation of the first power converter 201 is not limited in embodiments of this application.

It should be further noted that the first power converter 201 includes a transformer. In the three-phase full-bridge LLC structure, the single-phase full-bridge LLC structure, or the single-phase half-bridge LLC structure, the transformer may include a single winding or a plurality of windings.

Example 1: As shown in FIG. 6, a secondary-side circuit of the transformer in the single-phase full-bridge LLC structure is a double-winding circuit. In addition, as shown in FIG. 8 or FIG. 9, a secondary-side circuit of the transformer in the three-phase full-bridge LLC structure is a double-winding circuit.

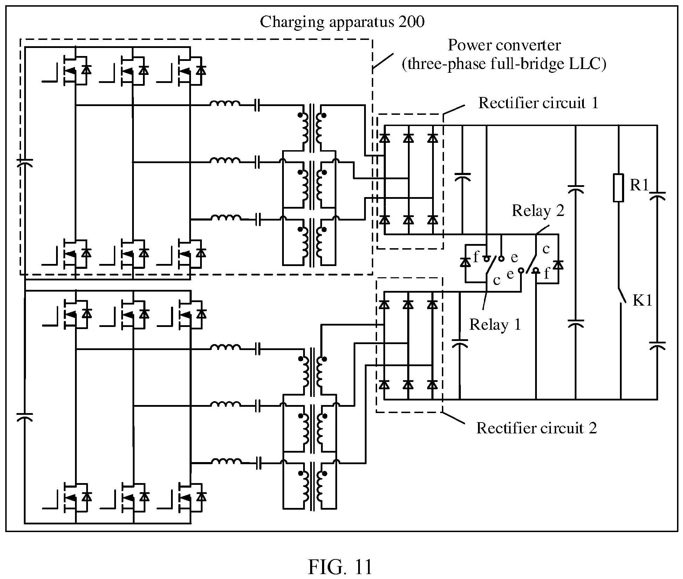

Example 2: As shown in FIG. 7, a secondary-side circuit of the transformer in the single-phase full-bridge LLC structure is a single-winding circuit. In addition, as shown in FIG. 11, a secondary-side circuit of the transformer in the three-phase full-bridge LLC structure is a single-winding circuit.

In this way, a plurality of possible implementations are provided for the transformer in the first power converter 201, so that the first power converter 201 can be flexibly designed, and the charging apparatus 200 provided in this embodiment of this application can be flexibly implemented.

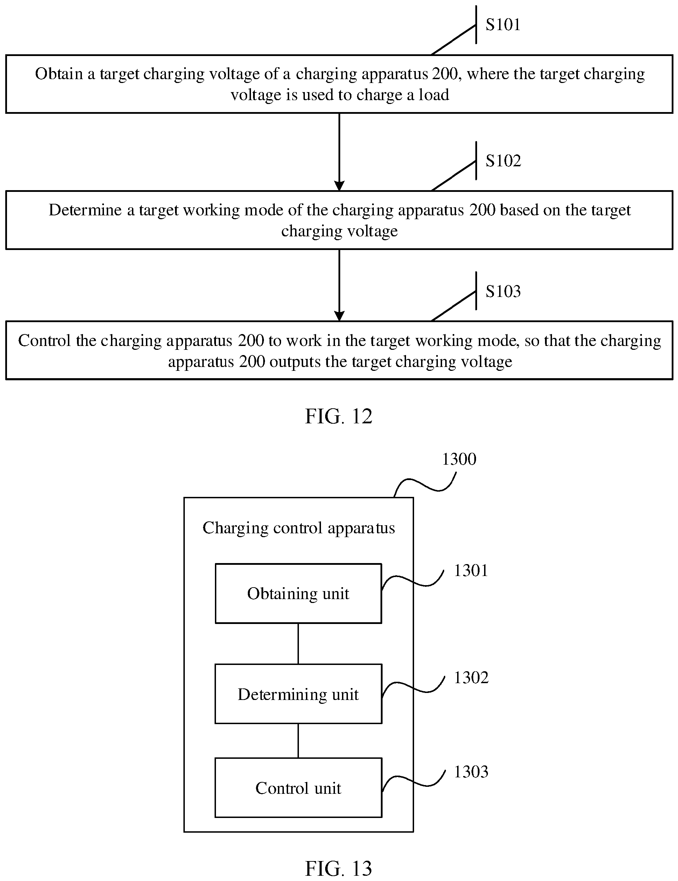

Based on the foregoing charging apparatus 200, an embodiment of this application further provides a charging control method. FIG. 12 is a schematic flowchart of a charging control method according to an embodiment of this application. The method may be applied to a charging control apparatus or a control circuit in the charging apparatus 200. The method includes the following steps.

S101: Obtain a target charging voltage of the charging apparatus 200, where the target charging voltage is used to charge a load.

It should be noted that the target charging voltage is determined based on a charging requirement of the to-be-charged load. For example, if high-power fast charging needs to be performed on the to-be-charged load to shorten charging time, the target charging voltage is set to a large value. For another example, if the to-be-charged load is a low-power device, the target charging voltage may be set to a small value.

S102: Determine a target working mode of the charging apparatus 200 based on the target charging voltage.

In this embodiment of this application, the target working mode is a serial connection mode or a parallel connection mode. In the serial connection mode, a first movable contact S1 in the charging apparatus 200 is connected to a first static contact 1, and a second movable contact S2 is connected to a third static contact 3, so that a first output end A and a second output end B are connected in series. In the parallel connection mode, a first movable contact S1 is connected to a second static contact 2, and a second movable contact S2 is connected to a fourth static contact 4, so that a first output end A and a second output end B are connected in parallel.

In a possible implementation, a process of determining the target working mode of the charging apparatus 200 based on the target charging voltage may be: determining whether the target charging voltage is greater than a first threshold; and if the target charging voltage is greater than the first threshold, determining that the target working mode is the serial connection mode; or if the target charging voltage is less than or equal to the first threshold, determining that the target working mode is the parallel connection mode.

It may be understood that the first threshold is a voltage threshold for performing serial-to-parallel conversion at an output end of a first power converter. Therefore, if the target charging voltage is greater than the voltage threshold, it is determined that the target working mode is the serial connection mode; or if the target charging voltage is less than or equal to the voltage threshold, it is determined that the target working mode is the parallel connection mode. In this way, the target working mode of the charging apparatus 200 is determined based on the target charging voltage of the to-be-charged load, so that the charging apparatus 200 can output the corresponding target charging voltage, thereby effectively meeting the charging requirement of the to-be-charged load.

S103: Control the charging apparatus 200 to work in the target working mode, so that the charging apparatus 200 outputs the target charging voltage.

It should be understood that, in this embodiment of this application, the charging apparatus 200 is controlled to work in the target working mode, that is, each circuit module in the charging apparatus 200 is controlled to work in a corresponding state. For example, the first output end and the second output end of the first power converter in the charging apparatus 200 can be connected in parallel or in series by controlling conduction states of a first relay and a second relay, so that the charging apparatus 200 outputs the target charging voltage. In this way, this can effectively simplify a control procedure for parallel connection or serial connection between a plurality of output ends of the first power converter.

It can be learned from the foregoing description of the charging apparatus 200 that the charging apparatus 200 may further include a first capacitor, a second capacitor, a third capacitor, and a discharge circuit. Still refer to FIG. 3. For example, the first capacitor is a capacitor C1, the second capacitor is a capacitor C2, the third capacitor is a capacitor C3 and a capacitor C4, and the discharge circuit 204 is a resistor R1 and a switch K1. Correspondingly, in a possible implementation, when the charging apparatus 200 is powered off or serial-to-parallel conversion is performed between the first output end and the second output end in the charging apparatus 200, the discharge circuit 204 can be controlled to discharge at least one of the capacitor C1, the capacitor C2, the capacitor C3, and the capacitor C4.

It can be learned from the foregoing description of the charging apparatus 200 that the charging apparatus 200 may further include a first semiconductor device and a second semiconductor device. Still refer to FIG. 3. For example, the first semiconductor device is a diode D1, and the second semiconductor device is a diode D2. An anode of the diode D1 is connected to the second static contact 2, and a cathode of the diode D1 is connected to the first movable contact S1. An anode of the diode D2 is connected to the second movable contact S2, and a cathode of the diode D2 is connected to a fourth movable contact 4. Correspondingly, when the first relay 202 is faulty, the diode D1 is controlled to be conducted, so that the charging voltage provided by the first power converter 201 for the load can be normally output. When the second relay 203 is faulty, the diode D2 is controlled to be conducted, so that the charging voltage provided by the first power converter 201 for the load can be normally output. In this way, this effectively improves circuit reliability of the charging apparatus 200.

In a possible implementation, before the charging apparatus 200 is controlled to work in the target working mode, whether a current working mode of the charging apparatus 200 is the same as the target working mode may be further determined. If the current working mode of the charging apparatus 200 is the same as the target working mode, current conduction states of the first relay 202 and the second relay 203 are maintained. If the current working mode of the charging apparatus 200 is different from the target working mode, current conduction states of the first relay 202 and the second relay 203 are adjusted, and the current working mode is switched to the target working mode. In this way, this can reduce a repeated control procedure for parallel connection or serial connection between a plurality of output ends of the first power converter 201 in the charging apparatus 200, or implement a serial-to-parallel conversion procedure for the plurality of output ends of the first power converter.

It can be learned from the foregoing description of the charging apparatus 200 that the charging apparatus 200 may further include a third semiconductor device. One end of the third semiconductor device is connected to a negative electrode of the first output end, and the other end of the third semiconductor device is connected to a positive electrode of the second output end. The method further includes: when the current working mode of the charging apparatus 200 is switched to the target working mode, controlling the third semiconductor device to be conducted. For example, as shown in FIG. 4, the third semiconductor device is an IGBT, an emitter of the IGBT is connected to the negative electrode of the first output end A, and a collector of the IGBT is connected to the positive electrode of the second output end B. Therefore, when the current working mode of the charging apparatus 200 is switched to the target working mode, the charging control apparatus or the control circuit may further control the IGBT to be conducted, so that an impulse current generated when serial-to-parallel conversion is performed between the first output end A and the second output end B may flow through the IGBT, and the first relay 202 and the second relay 203 can be closed with zero voltage. This effectively avoids arcing of the first relay 202 or the second relay 203, and further effectively improves safety and reliability of the charging apparatus 200.

It should be understood that the foregoing charging control method may be implemented by the charging control apparatus or the control circuit in the charging apparatus 200.

In a possible implementation, the control circuit is disposed in the charging apparatus 200, and the control circuit is connected to the first relay and the second relay in the charging apparatus 200, so that serial connection, parallel connection, or serial-to-parallel conversion between a plurality of output ends of the first power converter in the charging apparatus 200 can be controlled by using the control circuit, and no separate charging control apparatus needs to be disposed, so that functions of the charging apparatus 200 are integrated.

In another possible implementation, no control circuit is disposed in the charging apparatus 200, but the charging control apparatus is disposed in a charging system in which the charging apparatus 200 is located. The charging control apparatus may control serial connection, parallel connection, or serial-to-parallel conversion between a plurality of output ends of the first power converter in the charging apparatus 200. In this way, the charging apparatus 200 can be adapted to various charging systems. For example, FIG. 13 shows a charging control apparatus 1300 according to an embodiment of this application. The charging control apparatus 1300 includes:
an obtaining unit 1301, configured to obtain a target charging voltage of the charging apparatus 200, where the target charging voltage is used to charge a load;
a determining unit 1302, configured to determine a target working mode of the charging apparatus 200 based on the target charging voltage, where the target working mode is a serial connection mode or a parallel connection mode; in the serial connection mode, a first movable contact is connected to a first static contact, a second movable contact is connected to a third static contact, and a first output end is connected in series to a second output end; and in the parallel connection mode, the first movable contact is connected to the second static contact, the second movable contact is connected to the fourth static contact, and the first output end is connected in parallel to the second output end; and
a control unit 1303, configured to control the charging apparatus 200 to work in the target working mode, so that the charging apparatus 200 outputs the target charging voltage.

When the determining unit 1302 is configured to determine the target working mode of the charging apparatus 200 based on the target charging voltage, the determining unit 1302 is specifically configured to: if the target charging voltage is greater than a first threshold, determine that the target working mode is the serial connection mode; or if the target charging voltage is less than or equal to a first threshold, determine that the target working mode is the parallel connection mode.

In a possible implementation, the charging apparatus 200 further includes a first capacitor, a second capacitor, a third capacitor, and the discharge circuit 204. The first output end is connected to the first capacitor, the second output end is connected to the second capacitor, and the discharge circuit is separately connected to the first capacitor, the second capacitor, and the third capacitor. Correspondingly, when the charging apparatus is powered off or serial-to-parallel conversion is performed between the first output end and the second output end, the control unit 1303 may further control the discharge circuit 204 to discharge any one of the first capacitor, the second capacitor, and the third capacitor.

In a possible implementation, the charging apparatus 200 further includes a first semiconductor device and a second semiconductor device. One end of the first semiconductor device is connected to the first movable contact S1, and the other end of the first semiconductor device is connected to the second static contact 2. One end of the second semiconductor device is connected to the second movable contact S2, and the other end of the second semiconductor device is connected to the fourth static contact 4. Correspondingly, the control unit 1303 may further control the first semiconductor device to be conducted when the first relay 202 is faulty, so that the first power converter 201 can normally output the target charging voltage; and the control unit 1303 may further control the second semiconductor device to be conducted when the second relay 203 is faulty, so that the first power converter 201 can normally output the target charging voltage, thereby further improving circuit reliability of the charging apparatus 200.

In a possible implementation, before controlling the charging apparatus 200 to work in the target working mode, the control unit 1303 may further determine whether a current working mode of the charging apparatus 200 is the same as the target working mode. If the current working mode of the charging apparatus 200 is the same as the target working mode, the control unit 1303 maintains current conduction states of the first relay and the second relay. If the current working mode of the charging apparatus 200 is different from the target working mode, the control unit 1303 adjusts current conduction states of the first relay and the second relay, and switches the current working mode to the target working mode.

In a possible implementation, the charging apparatus 200 further includes a third semiconductor device. One end of the third semiconductor device is connected to a negative electrode of the first output end, and the other end of the third semiconductor device is connected to a positive electrode of the second output end. Correspondingly, the control unit 1303 may further control the third semiconductor device to be conducted when the current working mode of the charging apparatus 200 is switched to the target working mode.

Based on a same technical concept, an embodiment of this application further provides a charging system. The charging system may include the charging apparatus 200 and the charging control apparatus 1300 described in the foregoing embodiments.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that persons skilled in the art can make various modifications and variations to this application without departing from the spirit and scope of this application. This application is intended to cover these modifications and variations of this application provided that they fall within the scope of protection defined by the following claims of this application and their equivalent technologies.

## Claims

1. A charging apparatus, comprising a first power converter, a first relay, and a second relay, wherein
the first power converter comprises a first output end and a second output end; the first relay comprises a first movable contact, a first static contact, and a second static contact, the first movable contact is connected to a negative electrode of the first output end, the first static contact is connected to a positive electrode of the second output end, and the second static contact is connected to a negative electrode of the second output end; the second relay comprises a second movable contact, a third static contact, and a fourth static contact, the second movable contact is connected to the positive electrode of the second output end, the third static contact is connected to the negative electrode of the first output end, and the fourth static contact is connected to a positive electrode of the first output end; and
the first movable contact is connected to the first static contact, and the second movable contact is connected to the third static contact, so that the first output end and the second output end are connected in series, to output a charging voltage provided by the first power converter for a load; or
the first movable contact is connected to the second static contact, and the second movable contact is connected to the fourth static contact, so that the first output end and the second output end are connected in parallel, to output a charging voltage provided by the first power converter for a load.

2. The charging apparatus according to claim 1, wherein the first relay or the second relay comprises any one of the following:
a single-pole double-throw relay, a double-pole double-throw relay, a single-pole three-throw relay, or a plurality of single-contact relays.

3. The charging apparatus according to claim 1 or 2, wherein the charging apparatus further comprises a first capacitor, a second capacitor, a third capacitor, and a discharge circuit; and
the first output end is connected to the first capacitor, the second output end is connected to the second capacitor, and the discharge circuit is separately connected to the first capacitor, the second capacitor, and the third capacitor.

4. The charging apparatus according to claim 3, wherein the discharge circuit comprises a first resistor and a first switch.

5. The charging apparatus according to any one of claims 1 to 4, wherein the charging apparatus further comprises a first semiconductor device and a second semiconductor device, wherein
one end of the first semiconductor device is connected to the first movable contact, and the other end of the first semiconductor device is connected to the second static contact; and
one end of the second semiconductor device is connected to the second movable contact, and the other end of the second semiconductor device is connected to the fourth static contact.

6. The charging apparatus according to claim 5, wherein the first semiconductor device or the second semiconductor device comprises any one of the following:
a diode, an insulated gate bipolar transistor IGBT, or a metal-oxide semiconductor field-effect transistor MOSFET.

7. The charging apparatus according to any one of claims 1 to 6, wherein the charging apparatus further comprises a third semiconductor device, one end of the third semiconductor device is connected to the negative electrode of the first output end, and the other end of the third semiconductor device is connected to the positive electrode of the second output end.

8. The charging apparatus according to claim 7, wherein the third semiconductor device comprises an IGBT or an MOSFET.

9. The charging apparatus according to any one of claims 1 to 8, wherein a topology structure of the first power converter is any one of a three-phase full-bridge LLC structure, a single-phase full-bridge LLC structure, a single-phase half-bridge LLC structure, a flyback converter, or a buck BUCK conversion circuit.

10. The charging apparatus according to claim 9, wherein the first power converter further comprises a transformer, and in the three-phase full-bridge LLC structure, the single-phase full-bridge LLC structure, or the single-phase half-bridge LLC structure, the transformer comprises a single winding or a plurality of windings.

11. A charging control method, applied to a charging apparatus, wherein the charging apparatus comprises a first power converter, a first relay, and a second relay; the first power converter comprises a first output end and a second output end; the first relay comprises a first movable contact, a first static contact, and a second static contact, the first movable contact is connected to a negative electrode of the first output end, the first static contact is connected to a positive electrode of the second output end, and the second static contact is connected to a negative electrode of the second output end; the second relay comprises a second movable contact, a third static contact, and a fourth static contact, the second movable contact is connected to the positive electrode of the second output end, the third static contact is connected to the negative electrode of the first output end, and the fourth static contact is connected to a positive electrode of the first output end; and
the method comprises:
obtaining a target charging voltage of the charging apparatus, wherein the target charging voltage is used to charge a load;
determining a target working mode of the charging apparatus based on the target charging voltage, wherein the target working mode is a serial connection mode or a parallel connection mode; in the serial connection mode, the first movable contact is connected to the first static contact, the second movable contact is connected to the third static contact, and the first output end is connected in series to the second output end; and in the parallel connection mode, the first movable contact is connected to the second static contact, the second movable contact is connected to the fourth static contact, and the first output end is connected in parallel to the second output end; and
controlling the charging apparatus to work in the target working mode, so that the charging apparatus outputs the target charging voltage.

12. The method according to claim 11, wherein the first relay or the second relay comprises any one of the following:
a single-pole double-throw relay, a double-pole double-throw relay, a single-pole three-throw relay, or a plurality of single-contact relays.

13. The method according to claim 11 or 12, wherein the determining a target working mode of the charging apparatus based on the target charging voltage comprises:
if the target charging voltage is greater than a first threshold, determining that the target working mode is the serial connection mode; or
if the target charging voltage is less than or equal to a first threshold, determining that the target working mode is the parallel connection mode.

14. The method according to any one of claims 11 to 13, wherein the charging apparatus further comprises a first capacitor, a second capacitor, a third capacitor, and a discharge circuit, wherein the first output end is connected to the first capacitor, the second output end is connected to the second capacitor, and the discharge circuit is separately connected to the first capacitor, the second capacitor, and the third capacitor; and
the method further comprises:
when the charging apparatus is powered off or serial-to-parallel conversion is performed between the first output end and the second output end, controlling the discharge circuit to discharge at least one of the first capacitor, the second capacitor, and the third capacitor.

15. The method according to any one of claims 11 to 14, wherein the charging apparatus further comprises a first semiconductor device and a second semiconductor device; one end of the first semiconductor device is connected to the first movable contact, and the other end of the first semiconductor device is connected to the second static contact; and one end of the second semiconductor device is connected to the second movable contact, and the other end of the second semiconductor device is connected to the fourth static contact; and
the method further comprises:
when the first relay is faulty, controlling the first semiconductor device to be conducted; and
when the second relay is faulty, controlling the second semiconductor device to be conducted.

16. The method according to any one of claims 11 to 15, wherein before the controlling the charging apparatus to work in the target working mode, the method further comprises:
determining whether a current working mode of the charging apparatus is the same as the target working mode; and
if the current working mode of the charging apparatus is the same as the target working mode, maintaining current conduction states of the first relay and the second relay; or
if the current working mode of the charging apparatus is different from the target working mode, adjusting current conduction states of the first relay and the second relay, and switching the current working mode to the target working mode.

17. The method according to claim 16, wherein the charging apparatus further comprises a third semiconductor device, one end of the third semiconductor device is connected to the negative electrode of the first output end, and the other end of the third semiconductor device is connected to the positive electrode of the second output end; and
the method further comprises:
when the current working mode is switched to the target working mode, controlling the third semiconductor device to be conducted.

18. A charging control apparatus, used in a charging apparatus, wherein the charging apparatus comprises a first power converter, a first relay, and a second relay; the first power converter comprises a first output end and a second output end; the first relay comprises a first movable contact, a first static contact, and a second static contact, the first movable contact is connected to a negative electrode of the first output end, the first static contact is connected to a positive electrode of the second output end, and the second static contact is connected to a negative electrode of the second output end; the second relay comprises a second movable contact, a third static contact, and a fourth static contact, the second movable contact is connected to the positive electrode of the second output end, the third static contact is connected to the negative electrode of the first output end, and the fourth static contact is connected to a positive electrode of the first output end; and
the apparatus comprises:
an obtaining unit, configured to obtain a target charging voltage of the charging apparatus, wherein the target charging voltage is used to charge a load;
a determining unit, configured to determine a target working mode of the charging apparatus based on the target charging voltage, wherein the target working mode is a serial connection mode or a parallel connection mode; in the serial connection mode, the first movable contact is connected to the first static contact, the second movable contact is connected to the third static contact, and the first output end is connected in series to the second output end; and in the parallel connection mode, the first movable contact is connected to the second static contact, the second movable contact is connected to the fourth static contact, and the first output end is connected in parallel to the second output end; and
a control unit, configured to control the charging apparatus to work in the target working mode, so that the charging apparatus outputs the target charging voltage.

19. A charging control apparatus, comprising a processor, wherein the processor is configured to: be coupled to a memory; and read and execute computer program instructions in the memory, to perform the method according to any one of claims 11 to 17.

20. A charging system, comprising the charging apparatus according to any one of claims 1 to 10 and a charging control apparatus, wherein the charging apparatus provides a charging voltage for a load under control of the charging control apparatus.

21. A charging system, comprising the charging control apparatus according to claim 19 and a charging apparatus, wherein the charging control apparatus is configured to control a charging voltage provided by the charging apparatus for a load.
